# EUROPÄISCHE PATENTSCHRIFT

(11) **EP 1 880 399 B1**
(45) Veröffentlichungstag und Bekanntmachung des Hinweises auf die Patenterteilung: **16.09.2009**
(21) Anmeldenummer: 06742325.1
(22) Anmeldetag: 11.05.2006
(51) Int. Cl.: H01G 4/35, H01G 4/30, H01G 4/12, H01C 7/10

(54) **ELEKTRISCHES DURCHFÜHRUNGSBAUELEMENT**
ELECTRICAL FEEDTHROUGH COMPONENT
ELEMENT DE TRAVERSEE ELECTRIQUE

(30) Priorität: 12.05.2005 DE 102005022142
(43) Veröffentlichungstag der Anmeldung: 23.01.2008
(73) Patentinhaber: EPCOS AG, 81669 München (DE)
(72) Erfinder: FEICHTINGER, Thomas, A-8010 Graz (AT); ORTNER, Markus, A-8010 Graz (AT)
(74) Vertreter: Fuchs, Alexander
(86) Internationale Anmeldenummer: PCT/DE2006/000817
(87) Internationale Veröffentlichungsnummer: WO 2006/119753

(56) Entgegenhaltungen:
- EP-A- 1 391 898
- PATENT ABSTRACTS OF JAPAN Bd. 2003, Nr. 12, 5. Dezember 2003 (2003-12-05) & JP 2004 228544 A (MARUWA CO LTD), 12. August 2004 (2004-08-12)
- PATENT ABSTRACTS OF JAPAN Bd. 1999, Nr. 01, 29. Januar 1999 (1999-01-29) & JP 10 290075 A (MURATA MFG CO LTD), 27. Oktober 1998 (1998-10-27)

## Beschreibung

Es wird ein elektrisches Durchführungsbauelement angegeben.

Aus der Druckschrift DE 101 36 545 A1 ist ein keramischer Vielschicht-Kondensator bekannt. Ein weiteres keramisches Bauelement sowie ein Verfahren zu dessen Herstellung ist aus der Druckschrift DE 101 32 798 C1 bekannt.

Des Weiteren sind aus den Druckschriften JP 2004 228544 A und EP 1 391 898 A keramische Vielschichtbauelemente bekannt. JP 2004 228544 A zeigt insbesondere ein Durchführungsbauelement gemäß dem Oberbegriff des Anspruchs 1.

Eine zu lösende Aufgabe besteht darin, ein elektrisches Durchführungsbauelement anzugeben, das eine hohe Kapazität bei einer geringen Grundfläche aufweist.

Die Aufgabe wird gelöst durch ein elektrisches Durchführungsbauelement gemäß Anspruch 1, mit einem Grundkörper, in dem erste Innenelektroden und zweite Innenelektroden angeordnet sind, wobei erste Innenelektroden mittels einer ersten Außenelektrode miteinander verbunden sind, die sich in einer Umfangsrichtung des Grundkörpers erstreckt, und wobei zweite Innenelektroden mittels einer sich in Axialrichtung des Grundkörpers erstreckenden Durchkontaktierung leitend miteinander verbunden sind. Das Durchführungsbauelement ist zur Oberflächenmontage vorgesehen.

Das angegebene Bauelement kann die Entstörung einer Signalleitung über einen weiten Frequenzbereich gewährleisten. Das angegebene Bauelement ist insbesondere als ein Durchführungsfilter zur Entstörung der Signalleitungen von Hochfrequenzschaltungen, beispielsweise als ein Breitbandfilter für IT Anwendungen vorgesehen. Das Bauelement kann z. B. in einem Stecker oder einem Netzteil integriert sein.

Das angegebene Bauelement zeichnet sich durch eine hohe Kapazität, eine geringe parasitäre Induktivitäten, eine hohe Stromtragfähigkeit insbesondere in Durchführungsrichtung und kleine Abmessungen aus. Hochfrequente Störsignale werden mit einer hohen Einfügedämpfung gedämpft. Die hohe Einfügedämpfung bei hohen Frequenzen ist auf den geringen Wert der parasitären Induktivitäten zurückzuführen.

Im folgenden wird das angegebene Bauelement und seine vorteilhaften Ausgestaltungen näher beschrieben. Vorteilhafte Ausgestaltungen ergeben sich auch aus den Merkmalen der abhängigen Ansprüche.

Die Durchkontaktierung ist leitend mit zweiten Außenelektroden verbunden, die zumindest teilweise an quer zur axialen Richtung angeordneten, einander gegenüber liegenden Stirnflächen des Grundkörpers angeordnet sind.

Abwechselnd angeordnete erste und zweite Innenelektroden bilden einen Elektrodenstapel. Die ersten und die zweiten Innenelektroden sind elektrisch voneinander isoliert. Die ersten Innenelektroden sind quer zu der ersten Außenelektrode angeordnet. Die zweiten Innenelektroden sind parallel zur zweiten Außenelektrode angeordnet.

Die zweiten Innenelektroden sind mittels der Durchkontaktierung aneinander angeschlossen. Die Kanten der zweiten Innenelektroden sind dagegen von der Mantelfläche des Grundkörpers beabstandet.

Die Kanten der ersten Innenelektroden reichen bis zur Mantelfläche des Grundkörpers. In den ersten Innenelektroden ist jeweils eine Aussparung zur Durchführung der Durchkontaktierung vorgesehen. Die Ausnehmung in der ersten Innenelektrode stellt vorzugsweise eine Öffnung bzw. ein Loch dar.

Die Durchkontaktierung ist im Wesentlichen parallel zur Grundfläche des Grundkörpers angeordnet. Die Durchkontaktierung ist vorzugsweise im Grundkörper verborgen. Die Durchkontaktierung kann als ein massiver Stab ausgeführt sein. Die Durchkontaktierung kann alternativ als eine im Grundkörper angeordnete Öffnung mit metallisierten Wänden ausgebildet sein.

Die erste Außenelektrode ist an der Mantelfläche des Grundkörpers angeordnet und umgibt den Grundkörper vorzugsweise allseitig.

Der Grundkörper ist in einer bevorzugten Ausführungsform ein Quader. Die Fläche des Grundkörpers, die zur Verbindung mit der Leiterplatte vorgesehen ist, wird als seine Unterseite oder die Hauptfläche bezeichnet. Zwei einander gegenüber liegenden Seitenflächen des Grundkörpers, auf denen die zweiten Außenelektroden angeordnet sind, werden als seine Stirnseiten bezeichnet. Die Stirnseiten können auch als eine Grundfläche und eine Deckfläche des Grundkörpers bezeichnet werden. Die übrigen vier Flächen bilden eine Mantelfläche des Grundkörpers.

Eine symmetrische Ausbildung des Grundkörpers ist von Vorteil. Das Durchführungsbauelement ist vorzugsweise gegenüber einer durch die Mitte des Grundkörpers durchgehenden und quer zur Achse der.Durchkontaktierung angeordneten Ebene spiegelsymmetrisch ausgebildet.

Das Durchführungsbauelement kann gegenüber einer Ebene, die parallel zur Grundfläche und quer zu Stirnflächen des Grundkörpers angeordnet ist und in der die Achse der Durchkontaktierung liegt, spiegelsymmetrisch ausgebildet sein.

Das Durchführungsbauelement kann gegenüber einer Ebene, die quer zur Grundfläche und quer zu Stirnflächen des Grundkörpers angeordnet ist und in der die Achse der Durchkontaktierung liegt, spiegelsymmetrisch ausgebildet sein.

Als Funktionseinheit wird ein "aktiver" Bereich des Grundkörpers bezeichnet, der durch einen Stapel von dielektrischen Schichten und dazwischen angeordneten ersten und zweiten Innenelektroden gebildet ist. Die ersten und die zweiten Innenelektroden sind dabei im Stapel abwechselnd übereinander angeordnet. Eine Funktionseinheit dient vorzugsweise als ein Kondensator oder Varistor. Das Durchführungsbauelement kann in einer Variante mehr als nur eine Funktionseinheit aufweisen.

Das Bauelement weist pro Funktionseinheit vorzugsweise zwei zweite Außenelektroden auf, die zumindest teilweise auf einander gegenüberliegenden Stirnflächen des Grundkörpers angeordnet sind. In einer Variante ist die Durchkontaktierung durch den Grundkörper hindurch geführt und verbindet die beiden zweiten Außenelektroden miteinander.

In einer weiteren Variante sind die Enden der Durchkontaktierung von der zweiten Außenelektrode beabstandet. In diesem Fall ist die Durchkontaktierung auf ihren beiden Enden jeweils mit mindestens einer dritten Innenelektrode leitend verbunden, deren Kanten einen auf der Mantelfläche des Grundkörpers angeordneten Teil der zweiten Außenelektrode kontaktieren. Somit ist eine besonders gute Anbindung der Durchkontaktierung und der zweiten Innenelektroden an die zweite Außenelektrode gewährleistet. Bevorzugt ist eine Variante, bei der an das jeweilige Ende der Durchkontaktierung mehrere dritte Innenelektroden angeschlossen sind.

In einer vorteilhaften Variante sind in einem Grundkörper mehrere Funktionseinheiten angeordnet, die jeweils im Wesentlichen so ausgebildet sind, wie die oben beschriebene Funktionseinheit. Dabei sind verschiedene Stapel von ersten und zweiten Innenelektroden jeweils einem eigenen Signalpfad zugeordnet.

Den zweiten Innenelektroden eines jeden Stapels ist mindestens eine eigene zweite Außenelektrode, vorzugsweise zwei eigenen zweiten Außenelektroden zugewiesen. Die ersten Innenelektroden aller Stapel sind vorzugsweise an mindestens eine gemeinsame erste Außenelektrode angeschlossen.

In Grundkörper können weitere Durchkontaktierungen angeordnet sein, welche jeweils mindestens zwei der ersten Innenelektroden elektrisch miteinander verbinden. Diese Durchkontaktierungen sind vorzugsweise zwischen jeweils zwei nebeneinander liegenden Stapeln von Innenelektroden angeordnet.

Die erste Außenelektrode ist vorzugsweise als ein Masseanschluss und die zweite Außenelektrode als ein Signalanschluss vorgesehen.

Das Durchführungsbauelement ist als ein zur Oberflächenmontage auf einer externen Leiterplatte vorgesehener Chip, d. h. als ein Bauelement mit SMD-Kontakten (SMD = Surface Mounted Device) ausgebildet. Ein SMD-Kontakt, z. B. zumindest ein Teil der ersten Außenelektrode, kann auf der zur Leiterplatte gewandten Unterseite des Grundkörpers angeordnet sein.

Ein SMD-Kontakt kann aber auch auf einer Seitenfläche des Grundkörpers angeordnet sein. Beispielsweise ist die als ein SMD-Kontakt vorgesehene zweite Außenelektrode zumindest teilweise auf einer Stirnseite des Grundkörpers angeordnet. Die zweite Außenelektrode kann die Stirnseite des Grundkörpers komplett oder nur einen Teil dieser Fläche bedecken. Die Stirnflächen des Grundkörpers sind dabei vorzugsweise frei von der ersten Außenelektrode.

Die zweite Außenelektrode kann über die Kanten, z. B. über die untere und/oder die obere Kante der ihr zugeordneten Stirnseite hinausgehen. Es ist vorteilhaft, wenn ein Teil der zweiten Außenelektrode auf der Unterseite des Grundkörpers angeordnet ist.

In einer vorteilhaften Variante ist mindestens ein Bereich der Mantelfläche des Grundkörpers von der ersten Außenelektrode unbedeckt. Die Mantelfläche des Grundkörpers ist in Axialrichtung vorzugsweise in zwei umlaufende bzw. gürtelförmige Randbereiche und einen zwischen diesen angeordneten, auch umlaufenden bzw. gürtelförmigen Mittelbereich unterteilt. Der Mittelbereich des Grundkörpers ist durch die Außenelektrode bedeckt, wobei die Randbereiche von der ersten Außenelektrode unbedeckt sind.

Das Durchführungsbauelement mit der Durchkontaktierung kann in einem Vielschichtverfahren hergestellt werden.

Dieses Verfahren umfasst die folgenden Schritte:
A) Randbereiche des Grundkörpers mit jeweils einer mit einer leitfähigen Paste gefüllten ersten Öffnung werden ausgebildet,
B) ein zwischenbereich des Grundkörpers mit darin angeordneten ersten und zweiten Innenelektroden und einer mit einer leitfähigen Paste gefüllten zweiten Öffnung wird ausgebildet, welche die zweiten Innenelektroden leitend miteinander verbindet und durch eine in den ersten Innenelektroden vorgesehene Aussparung hindurch geführt ist, wobei die ersten Innenelektroden so ausgebildet werden, dass ihre Kanten frei liegen,
C) der Zwischenbereich wird zwischen den Randbereichen derart ausgerichtet, dass die ersten Öffnungen und die zweite Öffnung entlang einer Achse angeordnet werden und eine Durchkontaktierung bilden,
D) zumindest auf der Oberfläche des Zwischenbereichs wird eine die Kanten der ersten Innenelektroden kontaktierende erste Außenelektrode erzeugt,
E) auf Stirnseiten des Grundkörpers werden mit der Durchkontaktierung leitend verbundene zweite Außenelektroden erzeugt.

Die Schritte A) und B) können gleichzeitig durchgeführt werden. Die Schritte D) und E) können in einem Verfahrensschritt durchgeführt werden.

Der Grundkörper kann vor den Schritten D) und E) gesintert werden. Die erste Außenelektroden und die zweiten Außenelektroden können jeweils als eine leitfähige Paste auf einen gesinterten Grundkörper aufgetragen und eingebrannt werden.

Jeder der genannten Bereiche des Grundkörpers kann in einem vielschichtverfahren erzeugt werden.

Im jeweiligen Randbereich wird zur Bildung eines Teils der Durchkontaktierung eine durchgehende, mit einer Metallpaste gefüllte Öffnung so ausgebildet, dass sie durch den jeweiligen Randbereich hindurch geht und auf eine als Stirnfläche des Grundkörpers vorgesehene Oberfläche des Randbereichs trifft. Auf diese Oberfläche wird später - beispielsweise erst nach dem Sintern des Grundkörpers - zur Bildung einer zweiten Außenelektrode zumindest im Bereich des freiliegenden Endes dieser Öffnung eine elektrisch leitfähige Paste aufgetragen, die sich beim Einbrennen der Außenelektrode mit der Stirnseite der Durchkontaktierung monolithisch verbindet.

Zum Erzeugen eines Randbereichs werden z. B. keramische Schichten mit darin ausgebildeten, durch eine elektrisch leitfähige Paste gefüllten durchgehenden Löchern so übereinander gestapelt, dass ihre Löcher entlang einer Achse - der Längsachse der zukünftigen Durchkontaktierung - übereinander angeordnet sind, und zusammengepresst. Diese Löcher bilden jeweils ein Teil der Durchkontaktierung. Die keramischen Schichten können unabhängig voneinander ausgebildet, und dann übereinander gestapelt und zusammengepresst werden, damit sie sich miteinander verbinden und eine vorgesehene Dicke annehmen.

Zum Erzeugen des Zwischenbereichs werden auch keramische Schichten mit darin ausgebildeten, durch eine leitfähige Paste gefüllten durchgehenden Löchern erzeugt. Zwischen den Keramikschichten werden z. B. durch Siebdruck, ggf. unter Verwendung von Masken zur Bildung von ersten und zweiten Innenelektroden leitfähige Flächen erzeugt.

Die endständigen Schichten des Zwischenbereichs können Keramikschichten sein. Die Keramikschichten werden so übereinander angeordnet, dass ein Loch über dem anderen angeordnet ist. Der so gebildete Stapel wird zusammengepresst und zwischen den Randbereichen angeordnet. Alle Bereiche werden zusammen nochmals verpresst, wobei der Grundkörper gebildet wird. Durch das Pressen des Randbereichs oder des Zwischenbereichs des Grundkörpers werden durch gefüllte Löcher gebildete Teile der Durchkontaktierung miteinander verbunden bzw. durch das Pressen aller Grundkörper-Bereiche eine durch den Grundkörper hindurch gehende, mit der leitfähigen Paste gefüllte Öffnung gebildet.

Der Grundkörper wird gesintert. Die in der durchgehenden Öffnung befindliche leitfähige Paste wird dabei zu einer in einer Variante massiven Durchkontaktierung umgewandelt.

In einer Variante kann die leitfähige Paste aus der durchgehenden Öffnung vor dem Sintern des Grundkörpers z. B. durch Absaugen teilweise entfernt werden. Die Innenwände der Öffnung bleiben aber mit der leitfähigen Paste bedeckt, so dass beim Sintern des Grundkörpers eine hohle Durchführung mit metallisierten Wänden entsteht.

In einer Variante des Verfahrens ist es möglich, anstelle der Schritte A) bis C) auf der Schichtenfolge des ersten Randbereichs die Schichtenfolge des Zwischenbereichs und auf dieser die Schichtenfolge des zweiten Randbereichs zu erzeugen.

In einer Variante werden die Randbereiche jeweils mit mindestens einer dritten Innenelektrode ausgebildet, deren Kanten jeweils auf die der Mantelfläche des Grundkörpers entsprechende Fläche des Randbereichs treffen. In einem zum Zwischenbereich gewandten Teil des Randbereichs wird wie oben beschrieben ein Teil der Durchkontaktierung ausgebildet. Bei mehreren dritten Innenelektroden wird in den dazwischen angeordneten Keramikschichten zur Bildung eines weiteren Teils der Durchkontaktierung jeweils ein Via-Loch ausgebildet.

Zur Bildung von zweiten Außenelektroden wird in einem späteren Verfahrensschritt eine Metallpaste teilweise auf der Mantelfläche des Grundkörpers derart aufgetragen, dass sie die Kanten der mindestens einen dritten Innenelektrode bedeckt. Beim Einbrennen der Metallpaste wird die zweite Außenelektrode gebildet, die mit der mindestens einen dritten Innenelektrode monolithisch verbunden ist.

Als Material für dielektrische Schichten ist z. B. Keramik geeignet. In Betracht kommt in einer Variante die Kondensatorkeramik, beispielsweise COG, X7R, Z5U, Y5V, HQM oder eine beliebige andere Kondensatorkeramik. In einer weiteren Variante können die Keramikschichten aus Varistorkeramik, die z. B. ZnO-Bi, ZnO-Pr, SrTiO₃ enthält, gebildet sein. Ein als Varistorkeramik ausgebildetes Durchführungsbauelement hat einerseits Filtereigenschaften und kann andererseits als Überspannungsschutz, insbesondere als ESD-Schutz dienen.

Das Durchführungsbauelement zeichnet sich durch eine hohe Stromtragfähigkeit vom z. B. mehr als 1 A aus. In einer Variante beträgt die Stromtragfähigkeit zumindest 2 A.

Das erfindungsgemäße Durchführungsbauelement wird nun anhand schematischer und nicht maßstabsgetreuer Figuren erläutert, wobei die Figuren 1A, 1B, 2A, 2B, 2C, 4A, 4B, 5A, 5B, 5C und 6 die erfindungsgemäß angeordneten dritten Innenelektroden nicht zeigen. Es zeigen:
Figur 1A ein Durchführungsbauelement in einer perspektivischen Draufsicht von oben;
Figur 1B den Grundkörper eines Durchführungsbauelements gemäß Figur 1A;
Figuren 2A und 2B den Schnitt CC und BB durch das Durchführungsbauelement gemäß Figur 1A;
Figur 2C den Schnitt AA durch das Durchführungsbauelement gemäß Figur 1A (mit einer Variante der Anbindung von zweiten Innenelektroden an zweite Außenelektroden);
Figur 3 den Schnitt AA durch das Durchführungsbauelement gemäß Figur 1A (mit der erfindungsgemäßen Variante der Anbindung von dritten Innenelektroden an zweite Außenelektroden);
Figur 4A die Variante eines Durchführungsbauelements mit mehreren unabhängigen Funktionseinheiten in einer perspektivischen Draufsicht von oben;
Figur 4B den Grundkörper des Durchführungsbauelements gemäß Figur 4A;
Figuren 5A und 5B den Schnitt AA und BB durch das Durchführungsbauelement gemäß Figur 4A;
Figur 5C den Schnitt CC durch das Durchführungsbauelement gemäß Figur 4A (eine Variante, bei der die endständigen ersten Innenelektroden mittels weiterer Durchkontaktierungen elektrisch miteinander verbunden sind);
Figur 6 den Schnitt CC durch das Durchführungsbauelement gemäß Figur 4A (eine Variante, bei der alle ersten Innenelektroden mittels weiterer Durchkontaktierungen elektrisch miteinander verbunden sind).

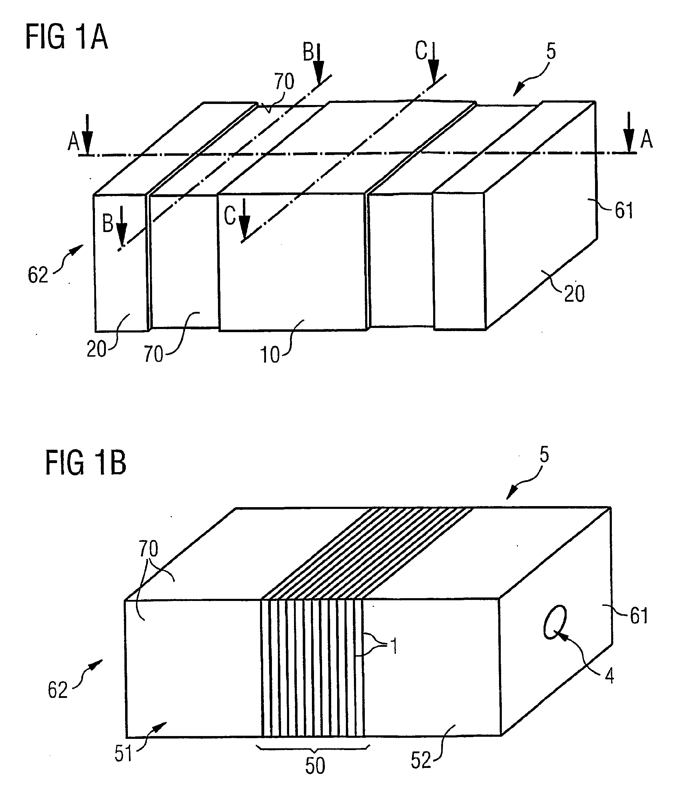

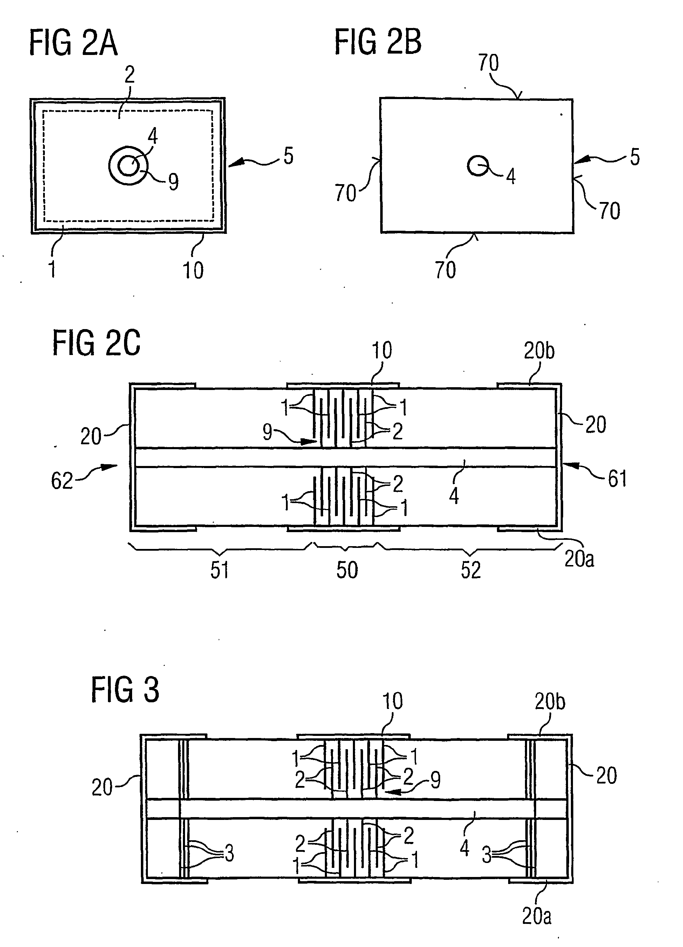

Figur 1A zeigt eine perspektivische Ansicht eines Durchführungsbauelements mit einer in einem quaderförmigen Grundkörper 5 integrierten Funktionseinheit. Die Funktionseinheit, die auch als aktiver Bereich des Bauelements bezeichnet wird, ist durch einen Stapel von dielektrischen Schichten und dazwischen angeordneten ersten und zweiten Innenelektroden 1, 2 gebildet. Die ersten und die zweiten Innenelektroden sind dabei im Stapel abwechselnd übereinander - in Figur 2C nebeneinander - angeordnet.

Figur 1B zeigt die entsprechende Ansicht des Grundkörpers 5 vor der Auftragung der Außenelektroden 10, 20. Verschiedene Querschnitte dieses Bauelements sind in Figuren 2A, 2B und 2C gezeigt. Die erfindungsgemäße Variante der Anbindung von dritten Innenelektroden an die zweite Außenelektrode ist in Figur 3 vorgestellt.

Der Grundkörper 5 ist in zwei "passive" Randbereiche 51, 52 und einen zwischen diesen angeordneten "aktiven" Bereich - den Zwischenbereich 50 - aufgeteilt. Der Zwischenbereich 50 bildet die Funktionseinheit des Bauelements.

Alle ersten Innenelektroden sind mit einem ersten elektrischen Potential verbunden. Alle zweiten Innenelektroden sind mit einem zweiten elektrischen Potential, vorzugsweise einem Bezugspotential verbunden und von den ersten Innenelektroden elektrisch isoliert.

Die ersten Innenelektroden 1 stellen jeweils eine leitende Fläche dar, in der eine vorzugsweise als ein Loch ausgeführte Aussparung 9 zur Durchführung einer Durchkontaktierung 4 vorgesehen ist. Die ersten Innenelektroden 1 sind bis auf ihre Kanten im Grundkörperinneren verborgen. Die Kanten der ersten Innenelektroden 1 liegen auf der Oberfläche bzw. Mantelfläche des Grundkörpers frei. Auf der Mantelfläche 70 des Grundkörpers 5 ist eine gürtelartige erste Außenelektrode 10 angeordnet, die allseitig die Kanten der ersten Innenelektroden 1 kontaktiert. Die erste Außenelektrode 10 wird vorzugsweise an Masse angeschlossen und dient als Abschirmung der Funktionseinheit.

Die zweiten Innenelektroden 2 sind komplett im Grundkörperinneren verborgen und insbesondere von der ersten Außenelektrode 10 beabstandet (Fig. 2A). Die zweiten Innenelektroden 2 sind mittels der Durchkontaktierung 4 elektrisch miteinander verbunden. Sie sind ferner mittels einer elektrischen Verbindung, die die Durchkontaktierung 4 umfasst, mit zwei zweiten Außenelektroden 20 elektrisch verbunden.

Auf beiden Stirnseiten 61, 62 des Grundkörpers 5 ist jeweils eine zweite Außenelektrode 20 angeordnet, die die entsprechende Stirnseite komplett bedeckt. Die Außenelektrode 20 geht über die Kanten der Stirnfläche 61 bzw. 62 hinaus, so dass Teile dieser Elektrode auf allen Seiten der Mantelfläche 70 des Grundkörpers angeordnet sind.

Die Durchkontaktierung 4 ist komplett im Inneren des Grundkörpers verborgen. Die Durchkontaktierung 4 kann in einer Variante als ein massiver Stab ausgebildet sein.

Die Durchkontaktierung 4 kann alternativ als ein Hohlrohr, d. h. eine durchgehende Öffnung mit metallisierten'Innenwänden ausgebildet sein. Die Durchkontaktierung 4 geht in einer Variante auch durch die Außenelektroden hindurch, so dass die Außenelektroden jeweils eine Öffnung aufweisen. Durch eine derart ausgebildete Durchkontaktierung kann von außen ein elektrischer Leiter, z. B. ein Draht hindurch geführt werden. Der elektrische Leiter ist mit der Durchkontaktierung vorzugsweise zumindest stirnseitig fest verbunden, z. B. verlötet. Möglich ist aber auch, dass eine als Hohlrohr ausgebildete Durchkontaktierung stirnseitig durch Außenelektroden abgeschlossen ist.

Das Durchführungsbauelement wird vorzugsweise in einer Signalleitung angeordnet, wobei die Durchkontaktierung 4 einen Teil der Signalleitung und die Funktionseinheit einen Kondensator oder einen Varistor bildet, der zwischen der Signalleitung und Masse angeordnet ist.

In Figur 2A ist der Querschnitt des aktiven Bereichs des Bauelements, d. h. des Zwischenbereichs 50 des Grundkörpers 5 gemäß Figuren 1A, 1B gezeigt. Die an die Durchkontaktierung angeschlossene zweite Innenelektrode 2 ist mit einer gestrichelten Linie angedeutet. Die Fläche der ersten Innenelektrode 1 stimmt mit dem Querschnitt des Grundkörpers 5 überein. Die Aussparung 9 der ersten Innenelektrode 1 stellt eine runde Öffnung im Mittelbereich dieser Elektrode dar, so dass die erste Innenelektrode 1 von der Durchkontaktierung 4 beabstandet ist.

In Figur 2B ist der Querschnitt eines ersten passiven Bereichs des Bauelements, d. h. des Randbereichs 51 des Grundkörpers 5 gemäß Figuren 1A, 1B gezeigt. Der zweite Randbereich 52 ist vorzugsweise spiegelsymmetrisch zu dem ersten Randbereich 51 ausgebildet. Obwohl dies in Figur 1B nicht gezeigt ist, ist der jeweilige Randbereich 51, 52 vorzugsweise durch übereinander gestapelte dielektrische Schichten gebildet, wobei in jeder dieser Schichten ein Teil der Durchkontaktierung 4 ausgebildet ist.

In Figuren 1A und 2C ist gezeigt, dass die zweiten Außenelektrode 20 des Bauelements jeweils kappenförmig ausgebildet sind, wobei ein Teil 20a der Außenelektrode 20 auf der Unterseite und ihr - hauptsächlich aus Symmetriegründen vorgesehener - weiterer Teil 20b auf der Oberseite des Grundkörpers 5 angeordnet ist.

In einer hier nicht gezeigten Variante kann auf die über die Stirnseite 61, 62 hinausgehenden Teile 20a, 20b der zweiten Außenelektrode 20 verzichtet werden, da eine senkrecht auf der Anschlussfläche einer Leiterplatte stehende Außenelektrode im Prinzip auch als ein SMD-Kontakt geeignet ist. In diesem Fall ist die zweite Außenelektrode 20 komplett auf der Stirnseite angeordnet.

In einer in Figur 2C gezeigten Variante geht die Durchkontaktierung 4 durch den Grundkörper 5 hindurch, so dass ihre Enden jeweils auf die Stirnseiten 61, 62 des Grundkörpers 5 bzw. auf die darauf angeordneten zweiten Außenelektroden 20 treffen. In diesem Fall besteht die elektrische Verbindung zwischen den beiden zweiten Außenelektroden 20 aus der Durchkontaktierung 4.

In der in Figur 3 gezeigten erfindungsgemäßen Variante sind die Enden der Durchkontaktierung 4 in horizontaler Richtung von der jeweiligen zweiten Außenelektrode 20 durch eine oder mehrere dielektrische Schichten beabstandet. Die Enden der Durchkontaktierung 4 sind jeweils mit drei dritten Innenelektroden 3 elektrisch verbunden. Zwischen jeweils zwei benachbarten dritten Innenelektroden 3 ist eine dielektrische Schicht angeordnet.

Die dritten Innenelektroden 3 stellen jeweils eine durchgehende leitende Fläche dar, die bis auf ihre Kanten im Grundkörperinneren verborgen ist. Die Kanten der dritten Innenelektroden 3 liegen auf der Mantelfläche des Grundkörpers frei und werden durch die auf der Mantelfläche 70 des Grundkörpers 5 angeordneten Teile 20a, 20b der zweiten Außenelektrode 20 vorzugsweise allseitig kontaktiert.

Die Durchkontaktierung 4 durchstößt alle dritten Innenelektroden 3 bis auf die letzte dritte Innenelektrode 3, auf die das Ende der Durchkontaktierung 4 trifft. In diesem Fall ist die elektrische Verbindung zwischen den zweiten Innenelektroden 2 und der zweiten Außenelektrode 20 zum einen durch die Durchkontaktierung 4 und zum anderen durch die parallel geschalteten dritten Innenelektroden 3 gebildet. Diese Art der elektrischen Anbindung zeichnet sich durch besonders niedrige Verluste an der Stoßstelle zu den zweiten Außenelektroden 20 aus.

Anstelle von drei dritten Innenelektroden 3 kann je nach Ausführung nur eine dritte Innenelektrode, zwei oder mehr als drei dritten Innenelektroden zur Anbindung der Durchkontaktierung 4 an die auf der Mantelfläche 70 angeordneten Teile 20a, 20b der zweiten Außenelektrode 20 verwendet werden.

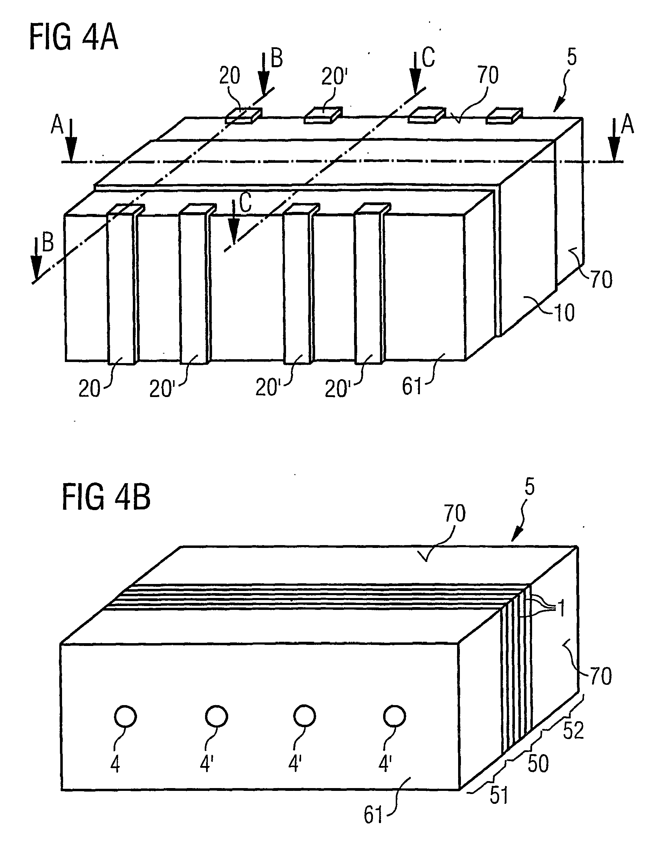

Figur 4A zeigt eine perspektivische Ansicht eines Durchführungsbauelements mit mehreren in einem Grundkörper 5 integrierten Funktionseinheiten. Figur 4B zeigt die entsprechende Ansicht des Grundkörpers 5 vor der Auftragung der Außenelektroden 10, 20, 20'.

Die erste Stirnseite 61 (Grundfläche) des Grundkörpers 5 befindet sich in Figuren 1A und 1B rechts und seine zweite Stirnseite 62 (Deckfläche) links vom Betrachter. In Figuren 4A und 4B ist die vordere Stirnseite 61 (Grundfläche) dem Betrachter zugewandt und die hintere Stirnseite 62 (Deckfläche) vom Betrachter abgewandt.

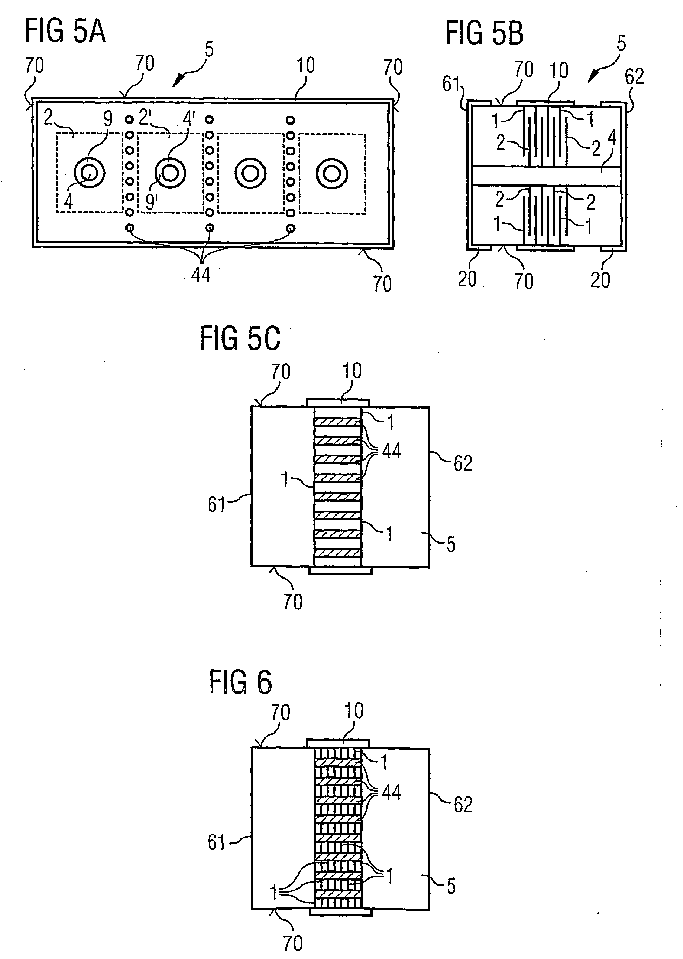

Verschiedene Querschnitte dieses Bauelements sind in Figuren 5A, 5B und 5C gezeigt. Eine Variante ist in Figur 6 vorgestellt.

Die Funktionseinheiten sind jeweils durch einen Stapel von dielektrischen Schichten und dazwischen angeordneten ersten und zweiten Innenelektroden 1, 2 bzw. 1, 2' gebildet. Die ersten und die zweiten Innenelektroden eines Stapels sind dabei abwechselnd übereinander - in Figur 5B nebeneinander - angeordnet.

Das Durchführungsbauelement kann insgesamt vier Funktionseinheiten umfassen, die vorzugsweise alle gleich bzw. wie die in Figuren 1A bis 3 bereits erläuterte Funktionseinheit ausgebildet sind. Jede Funktionseinheit wird in einem eigenen Signalpfad zur Entstörung angeordnet. Jeder Funktionseinheit ist ein Paar zweiter Außenelektroden zugeordnet. Der ersten Funktionseinheit sind zwei zweiten Außenelektroden 20 und der weiteren Funktionseinheiten sind jeweils zwei weiteren zweiten Außenelektroden 20' zugeordnet.

Alle Funktionseinheiten sind an eine gemeinsame erste Außenelektrode 10 angeschlossen. Vorzugsweise ist zumindest eine der ersten Innenelektroden 1 so ausgebildet, dass sie bis auf Aussparungen 9, 9' durchgehend ausgebildet ist und alle Stapel miteinander verbindet. In Figur 5A sind alle ersten Innenelektroden 1 jeweils so ausgebildet, dass alle ihren Kanten auf der Mantelfläche des Grundkörpers frei liegen und die erste Außenelektrode 10 allseitig kontaktieren.

Der in Figur 5B gezeigte Querschnitt durch den ersten Stapel stimmt im Prinzip bis auf die Skalierung des Grundkörpers 5 mit dem in Figur 2C gezeigten Querschnitt des Bauelements überein.

Jeweils zwei benachbarten, den verschiedenen Funktionseinheiten zugeordneten Stapel sind mittels einer zwischen diesen Stapeln angeordneten Reihe von weiteren Durchkontaktierungen 44 voneinander abgeschirmt, welche jeweils die ersten Innenelektroden 1 elektrisch miteinander verbinden. Die weiteren Durchkontaktierungen 44 sind über die ersten Innenelektroden 1 elektrisch mit der ersten Außenelektrode 10 verbunden. Die weiteren Durchkontaktierungen 44 sind parallel zur Durchkontaktierung 4 angeordnet.

Die Durchkontaktierungen 4, 4' von allen Stapeln sowie alle weiteren Durchkontaktierungen 44 sind im Grundkörperinneren verborgen.

In den Figuren 5C und 6 ist jeweils ein Querschnitt eines Bauelements gezeigt. Dieser Querschnitt entspricht einem zwischen zwei Stapeln angeordneten Bereich des Grundkörpers.

In der in Figur 5C gezeigten Variante des Bauelements sind nur die endständigen ersten Innenelektroden 1 wie in Fig. 5A erläutert ausgebildet. Die in einer Ebene angeordneten, innen liegenden ersten Innenelektroden 1 von zwei verschiedenen Stapeln sind in dieser Ebene nicht miteinander verbunden.

In der in Figur 6 gezeigten Variante durchstößt jede der weiteren Durchkontaktierungen 44 die innenliegenden ersten Innenelektroden 1 und trifft auf die endständigen ersten Innenelektroden 1.

Das erfindungsgemäße Durchführungsbauelement ist durch Anspruch 1 definiert, und nicht auf die Anzahl und die Form der in den Figuren gezeigten Elemente beschränkt. Die Durchkontaktierungen können einen beliebigen Querschnitt aufweisen.

### Bezugszeichenliste

- 1: erste Innenelektrode
- 10: erste Außenelektrode
- 2, 2': zweite Innenelektrode
- 20, 20': zweite Außenelektrode
- 20a: auf der Unterseite des Grundkörpers angeordneter Teil der zweiten Außenelektrode
- 20b: aus der Oberseite des Grundkörpers angeordneter Teil der zweiten Außenelektrode
- 3: dritte Innenelektrode
- 4, 4': Durchkontaktierung
- 44: weitere Durchkontaktierung
- 5: Grundkörper
- 50: Zwischenbereich des Grundkörpers
- 51, 52: Randbereich des Grundkörpers
- 61, 62: Stirnseite des Grundkörpers
- 70: Mantelfläche des Grundkörpers
- 9, 9': Aussparung
- AA: Schnitt quer zu den Stirnseiten und zur Unterseite des Grundkörpers
- BB, CC: Schnitt parallel zu den Stirnseiten

## Patentansprüche

1. Elektrisches Durchführungsbauelement,
das zur Oberflächenmontage vorgesehen ist, mit einem Grundkörper (5), in dem erste Innenelektroden (1) und zweite Innenelektroden (2) angeordnet sind, wobei erste Innenelektroden (1) mit einer ersten Außenelektrode (10) kontaktiert sind, die sich in einer Umfangsrichtung des Grundkörpers (5) erstreckt, wobei zweite Innenelektroden (2) mittels einer sich in Axialrichtung des Grundkörpers (5) erstreckenden Durchkontaktierung (4) leitend miteinander verbunden sind,
wobei die Durchkontaktierung (4) leitend mit zweiten Außenelektroden (20) verbunden ist , **dadurch gekennzeichnet, dass** die Durchkontaktierung an mindestens einem ihrer Enden mit einem auf der Mantelfläche des Grundkörpers (5) angeordneten Teil einer der zweiten Außenelektroden (20) über mindestens eine im Grundkörper (5) angeordnete dritte Innenelektrode (3) leitend verbunden ist.

2. Durchführungsbauelement nach Anspruch 1,
wobei die zweiten Außenelektroden (20) zumindest teilweise an quer zur axialen Richtung angeordneten, einander gegenüber liegenden Stirnflächen des Grundkörpers (5) angeordnet sind.

3. Durchführungsbauelement nach Anspruch 1 oder 2,
wobei die Durchkontaktierung (4) durch den Grundkörper (5) hindurch geführt ist und die beiden zweiten Außenelektroden (20) miteinander verbindet.

4. Durchführungsbauelement nach einem der Ansprüche 1 bis 3,
wobei die erste Außenelektrode (10) an der Mantelfläche des Grundkörpers (5) angeordnet ist und den Grundkörper (5) im Querschnitt quer zur Axialrichtung allseitig umgibt.

5. Durchführungsbauelement nach Anspruch 4,
wobei mindestens ein Bereich der Mantelfläche des Grundkörpers (5) von der ersten Außenelektrode (10) unbedeckt ist.

6. Durchführungsbauelement nach Anspruch 4 oder 5,
wobei die Mantelfläche des Grundkörpers (5) in Axialrichtung in Randbereiche und einen zwischen diesen angeordneten Mittelbereich unterteilt ist,
wobei die Außenelektrode (10) im Mittelbereich des Grundkörpers (5) angeordnet ist, und
wobei die Randbereiche von der ersten Außenelektrode (10) unbedeckt sind.

7. Durchführungsbauelement nach einem der Ansprüche 1 bis 6,
wobei in den ersten Innenelektroden (1) jeweils eine Aussparung (9) vorgesehen ist, durch die die Durchkontaktierung (4) hindurch geführt ist.

8. Durchführungsbauelement nach einem der Ansprüche 1 bis 7,
wobei die Durchkontaktierung (4) im Grundkörper (5) verborgen ist.

9. Durchführungsbauelement nach Anspruch 7 oder 8,
wobei die Ausnehmung (9) als eine Öffnung ausgebildet ist.

10. Durchführungsbauelement nach einem der Ansprüche 1 bis 9,
wobei der Grundkörper (5) ein Quader ist.

11. Durchführungsbauelement nach einem der Ansprüche 1 bis 10,
wobei die Durchkontaktierung (4) mindestens einen Abschnitt aufweist, der als ein massiver Stab ausgeführt ist.

12. Durchführungsbauelement nach einem der Ansprüche 1 bis 11,
wobei die Durchkontaktierung (4) mindestens einen Abschnitt aufweist, der im Grundkörper (5) als eine Öffnung mit metallisierten Wänden ausgebildet ist.

13. Durchführungsbauelement nach einem der Ansprüche 1 bis 12,
wobei die zweiten Außenelektroden (20) jeweils zumindest über die zwischen der Stirnfläche und der Grundfläche des Grundkörpers angeordnete Kante hinaus gehen.

14. Durchführungsbauelement nach einem der Ansprüche 1 bis 13,
wobei erste (1) und zweite (2) Innenelektroden abwechselnd angeordnet sind und einen Elektrodenstapel bilden.

15. Durchführungsbauelement nach Anspruch 14,
wobei im Grundkörper (5) mindestens ein weiterer Elektrodenstapel angeordnet ist, der im Wesentlichen wie der erste Elektrodenstapel ausgebildet ist.

16. Durchführungsbauelement nach Anspruch 15,
wobei für die zweiten Innenelektroden (2) eines jeden Stapels eigene zweiten Außenelektroden (20, 20') vorgesehen sind.

17. Durchführungsbauelement nach Anspruch 15 oder 16,
wobei die ersten Innenelektroden (1) der verschiedenen Stapel an mindestens eine gemeinsame erste Außenelektrode (10) angeschlossen sind.

18. Durchführungsbauelement nach einem der Ansprüche 1 bis 17,
das gegenüber einer durch die Mitte des Grundkörpers (5) durchgehenden und quer zur Axialrichtung angeordneten Ebene spiegelsymmetrisch ausgebildet ist.

19. Durchführungsbauelement nach einem der Ansprüche 1 bis 18,
das gegenüber einer Ebene, die parallel zur Grundfläche und quer zu Stirnflächen (61, 62) des Grundkörpers (5) angeordnet ist und in der die Axialrichtung liegt, spiegelsymmetrisch ausgebildet ist.

20. Durchführungsbauelement nach einem der Ansprüche 1 bis 19,
das gegenüber einer Ebene, die quer zur Grundfläche und quer zu Stirnflächen (61, 62) des Grundkörpers (5) angeordnet ist und in der die Axialrichtung liegt, spiegelsymmetrisch ausgebildet ist.

21. Durchführungsbauelement nach einem der Ansprüche 1 bis 20,
wobei weitere Durchkontaktierungen (44) vorgesehen sind, welche jeweils mindestens zwei der ersten Innenelektroden (1) leitend miteinander verbinden.

22. Durchführungsbauelement nach Anspruch 21,
wobei die weiteren Durchkontaktierungen (44) zwischen jeweils zwei nebeneinander liegenden Elektrodenstapeln angeordnet sind.

23. Durchführungsbauelement nach einem der Ansprüche 1 bis 22,
dessen Stromtragfähigkeit 1 Ampere übersteigt.

24. Durchführungsbauelement nach einem der Ansprüche 1 bis 23,
dessen Grundkörper (5) Varistorkeramik enthält.

## Claims

1. Electrical feedthrough component,
provided for surface mounting,
comprising a basic body (5), in which first internal electrodes (1) and second internal electrodes (2) are arranged,
wherein first internal electrodes (1) are contact-connected to a first external electrode (10) extending in a circumferential direction of the basic body (5),
wherein second internal electrodes (2) are conductively connected to one another by means of a through contact (4) extending in an axial direction of the basic body (5),
wherein the through contact (4) is conductively connected to second external electrodes (20),
**characterized in that** the through contact (4), at at least one of its ends, is conductively connected to a portion of one of the second external electrodes (20), said portion being arranged on the exterior surface of the basic body (5), by means of at least one third internal electrode (3) arranged in the basic body (5).

2. Feedthrough component according to Claim 1,
wherein the second external electrodes (20) are arranged at least partly at mutually opposite end faces of the basic body (5) that are arranged transversely with respect to the axial direction.

3. Feedthrough component according to Claim 1 or 2,
wherein the through contact (4) is led through the basic body (5) and connects the two second external electrodes (20) to one another.

4. Feedthrough component according to any of Claims 1 to 3,
wherein the first external electrode (10) is arranged at the exterior surface of the basic body (5) and surrounds the basic body (5) on all sides in cross section transversely with respect to the axial direction.

5. Feedthrough component according to Claim 4,
wherein at least one region of the exterior surface of the basic body (5) is not covered by the first external electrode (10).

6. Feedthrough component according to Claim 4 or 5,
wherein the exterior surface of the basic body (5) is subdivided in an axial direction into edge regions and a central region arranged between said edge regions,
wherein the external electrode (10) is arranged in the central region of the basic body (5), and
wherein the edge regions are not covered by the first external electrode (10).

7. Feedthrough component according to any of Claims 1 to 6,
wherein a cutout (9) is in each case provided in the first internal electrodes (1), the through contact (4) being led through said cutout.

8. Feedthrough component according to any of Claims 1 to 7,
wherein the through contact (4) is concealed in the basic body (5).

9. Feedthrough component according to Claim 7 or 8,
wherein the cutout (9) is embodied as an opening.

10. Feedthrough component according to any of Claims 1 to 9,
wherein the basic body (5) is a parallelepiped.

11. Feedthrough component according to any of Claims 1 to 10,
wherein the through contact (4) has at least one section embodied as a solid rod.

12. Feedthrough component according to any of Claims 1 to 11,
wherein the through contact (4) has at least one section embodied in the basic body (5) as an opening with metallized walls.

13. Feedthrough component according to any of Claims 1 to 12,
wherein the second external electrodes (20) in each case at least pass beyond the edge arranged between the end face and the bottom face of the basic body.

14. Feedthrough component according to any of Claims 1 to 13,
wherein first (1) and second (2) internal electrodes are arranged alternately and form an electrode stack.

15. Feedthrough component according to Claim 14,
wherein at least one further electrode stack embodied substantially like the first electrode stack is arranged in the basic body (5).

16. Feedthrough component according to Claim 15,
wherein dedicated second external electrodes (20, 20') are provided for the second internal electrodes (2) of each stack.

17. Feedthrough component according to Claim 15 or 16,
wherein the first internal electrodes (1) of the different stacks are connected to at least one common first external electrode (10).

18. Feedthrough component according to any of Claims 1 to 17,
which is embodied mirror-symmetrically with respect to a plane that passes through the centre of the basic body (5) and is arranged transversely with respect to the axial direction.

19. Feedthrough component according to any of Claims 1 to 18,
which is embodied mirror-symmetrically with respect to a plane that is arranged parallel to the bottom face and transversely with respect to end faces (61, 62) of the basic body (5) and in which the axial direction lies.

20. Feedthrough component according to any of Claims 1 to 19,
which is embodied mirror-symmetrically with respect to a plane that is arranged transversely with respect to the bottom face and transversely with respect to end faces (61, 62) of the basic body (5) and in which the axial direction lies.

21. Feedthrough component according to any of Claims 1 to 20,
wherein further through contacts (44) are provided, which in each case conductively connect at least two of the first internal electrodes (1) to one another.

22. Feedthrough component according to Claim 21,
wherein the further through contacts (44) are arranged between in each case two electrode stacks lying alongside one another.

23. Feedthrough component according to any of Claims 1 to 22,
the current-carrying capacity of which exceeds 1 ampere.

24. Feedthrough component according to any of Claims 1 to 23,
the basic body (5) of which contains varistor ceramic.

## Revendications

1. Composant électrique de traversée,
qui est prévu pour le montage en surface,
comprenant une embase (5), dans laquelle sont disposées des premières électrodes (1) intérieures et des deuxièmes électrodes (2) intérieures,
dans lequel des premières électrodes (1) intérieures sont en contact avec une première électrode (10) extérieure qui s'étend dans une direction périphérique de l'embase (5),
dans lequel des deuxièmes électrodes (2) intérieures sont reliées d'une manière conductrice au moyen d'une traversée (4) s'étendant dans la direction axiale de l'embase (5),
dans lequel la traversée (4) est reliée d'une manière conductrice à des deuxièmes électrodes (20) extérieures,
**caractérisé en ce que** la traversée est reliée d'une manière conductrice sur au moins l'une de ses extrémités à une partie, disposée sur la surface latérale de l'embase (5), de l'une des deuxièmes électrodes (20) extérieures par au moins une troisième électrode (3) intérieure disposée dans l'embase (5).

2. Composant de traversée suivant la revendication 1,
dans lequel les deuxièmes électrodes (20) extérieures sont disposées au moins en partie sur des surfaces frontales de l'embase (5) opposées l'une à l'autre et disposées transversalement à la direction axiale.

3. Composant de traversée suivant la revendication 1 ou 2,
dans lequel la traversée (4) passe à travers l'embase (5) et relie entre elles les deux deuxièmes électrodes (20) extérieures.

4. Composant de traversée suivant l'une des revendications 1 à 3,
dans lequel la première électrode (10) extérieure est disposée sur la surface latérale de l'embase (5) et entoure de tous côtés l'embase (5) en section transversale, transversalement à la direction axiale.

5. Composant de traversée suivant la revendication 4,
dans lequel au moins une partie de la surface latérale de l'embase (5) n'est pas recouverte par la première électrode (10) extérieure.

6. Composant de traversée suivant la revendication 4 ou 5,
dans lequel la surface latérale de l'embase (5) est subdivisée dans la direction axiale en des parties de bord et en une partie médiane disposée entre elles,
dans lequel l'électrode (10) extérieure est disposée dans la partie médiane de l'embase (5), et
dans lequel les parties de bord ne sont pas recouvertes par la première électrode (10) extérieure.

7. Composant de traversée suivant l'une des revendications 1 à 6,
dans lequel il est prévu dans les premières électrodes (1) intérieures respectivement un évidement (9), dans lequel passe la traversée (4).

8. Composant de traversée suivant l'une des revendications 1 à 7,
dans lequel la traversée (4) est dissimulée dans l'embase (5).

9. Composant de traversée suivant la revendication 7 ou 8,
dans lequel l'évidement (9) est constitué sous la forme d'une ouverture.

10. Composant de traversée suivant l'une des revendications 1 à 9,
dans lequel l'embase (5) est un parallélépipède.

11. Composant de traversée suivant l'une des revendications 1 à 10,
dans lequel la traversée (4) a au moins un tronçon qui est réalisé sous la forme d'un barreau plein.

12. Composant de traversée suivant l'une des revendications 1 à 11,
dans lequel la traversée (4) a au moins un tronçon qui est réalisé dans l'embase sous la forme d'une ouverture ayant des parois métalliques.

13. Composant de traversée suivant l'une des revendications 1 à 12,
dans lequel les deuxièmes électrodes (20) extérieures dépassent respectivement au moins du bord disposé entre la surface frontale et la surface de base de l'embase.

14. Composant de traversée suivant l'une des revendications 1 à 13,
dans lequel des premières (1) et deuxièmes (2) électrodes intérieures sont disposées en alternance et forment un empilement d'électrodes.

15. Composant de traversée suivant la revendication 14,
dans lequel il est disposé dans l'embase (5) au moins un autre empilement d'électrodes qui est constitué sensiblement comme le premier empilement d'électrodes.

16. Composant de traversée suivant la revendication 15,
dans lequel il est prévu pour les deuxièmes électrodes (2) intérieures de chaque empilement des deuxièmes électrodes (20, 20') extérieures propres.

17. Composant de traversée suivant la revendication 15 ou 16,
dans lequel les premières électrodes (1) intérieures des divers empilements sont reliées à au moins une première électrode (10) extérieure commune.

18. Composant de traversée suivant l'une des revendications 1 à 17,
qui est symétrique comme en un miroir par rapport à un plan passant par le milieu de l'embase (5) et disposé transversalement à la direction axiale.

19. Composant de traversée suivant l'une des revendications 1 à 18,
qui est symétrique comme en un miroir par rapport à un plan qui est parallèle à la surface de base et transversal aux surfaces (61, 62) frontales de l'embase (5), et dans lequel se trouve la direction axiale.

20. Composant de traversée suivant l'une des revendications 1 à 19,
qui est symétrique comme en un miroir par rapport à un plan qui est transversal à la surface de base et transversal aux surfaces (61, 62) frontales de l'embase (5), et dans lequel se trouve la direction axiale.

21. Composant de traversée suivant l'une des revendications 1 à 20,
dans lequel il est prévu d'autres traversées (44) qui relient respectivement deux des premières électrodes (1) intérieures entre elles d'une manière conductrice.

22. Composant de traversée suivant la revendication 21,
dans lequel les autres traversées (44) sont disposées respectivement entre deux empilements d'électrodes côte à côte.

23. Composant de traversée suivant l'une des revendications 1 à 22,
dont l'aptitude à porter le courant dépasse 1 ampère.

24. Composant de traversée suivant l'une des revendications 1 à 23,
dont l'embase (5) contient une céramique en varistance.
